# EUROPEAN PATENT SPECIFICATION

(11) **EP 2 125 341 B1**
(45) Date of publication and mention of the grant of the patent: **04.07.2012**
(21) Application number: 08718864.5
(22) Date of filing: 26.03.2008
(51) Int. Cl.: B29C 70/30, B29B 11/16, B29C 65/00

(54) **Fibre-reinforced composite moulding and manufacture thereof**
Faserverstärktes Verbundformteil und Herstellung davon
Moulage composite renforce par des fibres et fabrication de celui-ci

(30) Priority: 29.03.2007 GB 0706198; 19.10.2007 GB 0720583
(43) Date of publication of application: 02.12.2009
(73) Proprietor: Gurit (UK) Ltd., Newport Isle of Wight PO30 5WU (GB)
(72) Inventor: CADD, Kevin, Steven, Isle of Wight PO31 7DJ (GB); BUNCE, Christopher, William, Hants SO41 9HQ (GB)
(74) Representative: Jenkins, Peter David
(86) International application number: PCT/GB2008/001030
(87) International publication number: WO 2008/119940

(56) References cited:
- EP-A- 1 504 888
- EP-A- 1 625 929
- EP-A- 1 731 282
- WO-A-02/28624
- GB-A- 2 198 386

## Description

The present invention relates to a moulding material and to a method of manufacturing a fibre-reinforced composite moulding. In particular, the present invention relates to the manufacture of a fibre-reinforced composite moulding suitable for large composite structures, such as turbine blades, bridges and boat hulls.

Most fibre reinforced composite components require an outer surface coating to provide an aesthetic and protective finish to the component. Traditionally such components are either painted after moulding or a liquid in-mould coating (gelcoat) with sufficient environmental resistance is used. In some applications painting is preferred, especially when multiple component parts need to be assembled together and any misalignment or joint lines can thereafter be hidden by filling and fairing steps to give a more seamless finish. Painting can also be useful when the final colour has not been defined at the start of the build and the parts can be supplied in a ready to paint format.

A key problem in painting a fibre composite part can be that of preventing the fibre reinforcement pattern appearing in the final surface. This is more of a problem when heavier weight, lower cost reinforcement fibres and fabrics are used to reduce the material cost and the time taken to build up the thickness of the laminate. It is common to use a more expensive lower weight glass fibre layer or a non-structural surfacing tissue in addition to a gelcoat layer to buffer the paint from the fibre reinforcement. It is usual practice to first apply a liquid gelcoat into the mould, which in this case is designed to be easy to sand and repair any defects prior to painting. The gelcoat provides a resin barrier layer between the paint and the first fibre layers by providing a sufficient thickness to stop the fibre pattern showing in the final surface. If the laminate is applied into the mould without the gelcoat barrier coat it is common for the final surface to have pin-hole like defects. Pin-holes are a particular problem when painting as they can be hard to spot on the initial moulding, but when the part is painted, the paint then reticulates to form a larger defect around the pin-hole, requiring rework.

Even when using the gelcoat, it is also the case that sometimes a few pin-holes are present. It would be desirable to have a manufacturing process that substantially completely eliminated the problem of pin-holes.

To apply a gelcoat to larger parts, such as wind turbines, marine craft, architectural mouldings, and bridges additional equipment, such as gelcoat spraying machines and extraction equipment, or mixing equipment used in combination with manual brushing or rolling, is needed to reduce defects and achieve reasonable deposition rates of the gelcoat. A time delay then occurs while waiting for the gelcoat to partially cure to build sufficient strength for the remaining laminate to be added on the mould.

The three main thermoset composite processing methods currently used for manufacturing wind turbine blades are:
1. wet-laminating (also known as open moulding) - in this method, the thermoset resin can cure in ambient conditions, but the tools are usually heated to elevated temperature, 50-90°C, to speed up the resin curing process;
2. the use of pre-preg materials, and the Applicant's own & pre-impregnated dry touch composite material sold under the product name SPRINT® - such materials are typically cured at an elevated temperature between 85°C to 120°C; and
3. vacuum assisted resin transfer moulding (also known as VARTM, resin infusion, or vacuum infusion) - in this method liquid resin is infused under a vacuum into a dry fibre composite, and then can cure in ambient conditions, although the tools (i.e. the moulds) are usually heated to an elevated temperature between 50-90°C to speed up the curing process.

The surface finish quality plays an important role in the aerodynamic efficiency. Some blade manufacturers apply a weather resistant in-mould gelcoat to be the final surface layer, others manufacture spray-paint the blades afterwards. In either case the surface needs to be smooth and defect free. The blade manufacturers currently spend a considerable amount of time filling and fixing the blade surfaces and with the increase demand of wind turbine blades, a solution to decrease the amount of time each blade spends in the finishing production area would save time, reduce cost and increase the production capacity.

One solution for pre-preg parts is detailed in WO 02/094564 which discloses a pre-preg surface film material which is designed to provide a resin layer which is easy to prepare for painting. The material of WO 02/094564 gives a very low defect finish as it contains an air venting structure to remove any air trapped between the tool and surface film during a pre-preg vacuum bag curing process. The resin viscosity is formulated to first allow the resin to wet the tool surface and then control the resin viscosity through the cure. The resin viscosity and cure profile in combination with a resin retention fabric prevents the pin-holing defects normally found when curing fibre-prepreg materials direct against a mould surface using a vacuum bag process.

This solution avoids the need to have separate equipment to handle, mix, and apply the gelcoat. This also adds a health and safety advantage as liquid gelcoats are generally more hazardous.

The surface film material of WO 02/094564 is most suitable for use with pre-preg materials such as those disclosed in WO 00/072632. This surface film material is suitable for building smaller components such as automotive door wings and bonnets and is successfully marketed by Gurit as SF95 and SF86 pre-preg system. The separate surface film is particularly suitable for detailed lamination work as it can be cut and tailored into tight corners before the main structural laminate is added into the mould. On demoulding the surface has a high quality without pinholes or other defects and is easy to sand in preparation for painting.

The surface film material described in WO 02/094564 uses a partially impregnated polyester scrim at the surface of the moulding material which is in contact with the tool surface. The level of impregnation of the scrim controls the material tack. This can be a drawback if the scrim is dry and un-impregnated as it will sit on the surface of the resin. The material then lacks surface tack and it cannot be positioned to stay in place on the tool surface. If the material is too impregnated then the scrim, which forms part of the air venting pathway, loses its air permeability and surface defects are formed. As this is a fine and light weave material it is very easily impregnated and this makes the handling and room temperature storage of the material critical. The material can be difficult to work with and un-reliable when used in industrial applications, e.g. as part of a large composite component.

The surface film material of WO 02/094564 is less suitable for larger parts, that generally have a more consistent curvature. These large parts require multiple widths of the material and the ability to then walk on the mould to easily laminate the remaining fibre layers. If the fibrous reinforcement in the surface film described in WO 02/094564 becomes too impregnated from handling pressure causing the resin flow, this reduces the air venting properties of the material. With reduced venting trapped air can be left between the mould surface and surface film, which then forms defects requiring repair prior to painting. In a small component a reduced venting air path can be accommodated, as the distance to the vacuum source is small. In larger parts the air has to flow from one overlapped fabric to another and then out to the vacuum source. This can lead to a significant pressure drop from the combination of the increased distance to the vacuum source and more torturous venting path.

Using the material from WO 02/094564 on larger parts requires additional process steps. For example a motor boat hull was successfully made using the SF95 material defined in WO 02/094564 only when carefully controlling the handling by providing scaffolding in the mould to avoid walking on the material, ensuring the material was kept frozen prior to use to avoid it self-impregnating in a warm workshop, and putting in an additional 40°C vacuum de-bulking step after applying the surface film layer to the tool before starting the main laminate. These additional steps were required for larger parts to ensure a defect free surface. The de-bulking step and scaffolding added a significant time and cost penalty. As a result the material described in WO 02/094564 lost its main time advantage over using a gelcoat. The production had to be tightly scheduled to avoid leaving the surface film out in the workshop, and to keep the material in as a fresh state as possible to maintain the full venting structure.

The present invention overcomes this problem by integrating a surface resin layer into the first structural fibre reinforcement layer to form a novel moulding material which gives a moulded finish that is easy to prepare for painting.

WO-A-02/028624 discloses a moulding material comprising a core layer, a reinforcement layer on each surface of the core layer and a surfacing layer on a reinforcement layer.

EP-A-1504888 discloses a laminate of metal layers and prepreg layers, the laminate including a rebate.

According to a first aspect of the present invention there is provided a moulding material comprising at least one dry fibrous reinforcement layer having a surface resin material layer conjoined to a first surface thereof and a structural resin material layer conjoined to a second surface thereof, wherein an elongate edge of the structural resin material layer is located inwardly of an adjacent elongate edge of at least the surface resin material layer to provide a stepped configuration in which the structural resin material is provided with a stepped recess which is free from resin and is located at the edge of the structural resin layer.

Typically, the moulding material is provided with more than one dry fibrous reinforcement layer. The separate dry fibrous reinforcement layers can be made of the same or different materials. Preferably, if the moulding material is provided with more than one dry fibrous layer, the reinforcement layer adjacent to the structural layer is provided with a recess having the same dimensions as that of the structural resin material.

Typically the structural resin and surface resin materials have a different viscosity. The viscosity of the structural resin is usually selected to be higher than that of the surface resin at room temperature. The surface resin typically has a higher viscosity than the structural resin when heated to keep the surface resin close to the mould surface during processing. Preferably the structural resin impregnates the dry fibrous layer during processing.

The surface resin is selected such that it is air permeable to provide an additional pathway for the removal of air. The thickness of the surface layer is preferably selected to be 100-400 microns. The thickness of the surface layer is preferably 170-270 microns. The surface resin layer of the moulding material may be provided with a layer of scrim material to assist resin retention of the mould surface. Typically the scrim layer is a polyester material.

The surface resin is preferably selected from the group consisting of thermoset resins such as epoxy, cyanate ester and phenolic resins. Suitable epoxy resins include diglycidyl ethers of bisphenol A, diglycidyl ethers of bisphenol F, epoxy novolac resins and N-glycidyl ethers, glycidyl esters, aliphatic and cycloaliphatic glycidyl ethers, glycidyl ethers of aminophenols, glycidyl ethers of any substituted phenols and blends thereof. Also included are modified blends of the aforementioned thermosetting polymers. These polymers are typically modified by rubber or thermoplastic addition. Any suitable catalyst may be used. The catalyst will be selected to correspond to the resin used. One suitable catalyst for use with an epoxy resin is a dicyandiamide curing agent. The catalyst may be accelerated. Where a dicyandiamide catalyst is used, a substituted urea may be used as an accelerator. Suitable accelerators include Diuron, Monuron, Fenuron, Chlortoluron, bis-urea of toluenedlisocyanate and other substituted homologues. The epoxy curing agent may be selected from Dapsone (DDS), Diaminodiphenyl methane (DDM), BF3-amine complex, substituted imidazoles, accelerated anhydrides, metaphenylene diamine, diaminodiphenylether, aromatic polyetheramines, aliphatic amine adducts, aliphatic amine salts, aromatic amine adducts and aromatic amine salts.

The surface material can be provided with a toughening agent. Suitable toughening agents can be selected from liquid rubber (such as acrylate rubbers, or carboxyl-terminated acrylonitrile rubber), solid rubber (such as solid nitrite rubber, or core-shell rubbers), thermoplastics (such as poly (EtherSulphone), poly (Imide)), block copolymers (such as styrene-butadiene-methacrylate triblocks), or blends thereof.

The structural resin is preferably selected from the group consisting of thermoset resins such as epoxy, cyanate ester and phenolic systems. Suitable epoxy resins include diglycidyl ethers of bisphenol A, diglycidyl ethers of bisphenol F, epoxy novolac resins and N-glycidyl ethers, glycidyl esters, aliphatic and cycloaliphatic glycidyl ethers, glycidyl ethers of aminophenols, glycidyl ethers of any substituted phenols and blends thereof. Also included are modified blends of the aforementioned thermosetting polymers. These polymers are typically modified by rubber or thermoplastic addition. Any suitable catalyst may be used. The catalyst will be selected to correspond to the resin used. One suitable catalyst for use with an epoxy resin is a dicyandiamide curing agent. The catalyst may be accelerated. Where a dicyandiamide catalyst is used, a substituted urea may be used as an accelerator. Suitable accelerators include Diuron, Monuron, Fenuron, Chlortoluron, his-urea of toluenedlisocyanate and other substituted homologues. The epoxy curing agent may be selected from Dapsone (DDS), Diaminodiphenyl methane (DDM), BF3-amine complex, substituted imidazoles, accelerated anhydrides, metaphenylene diamine, diaminodiphenylether, aromatic polyetheramines, aliphatic amine adducts, aliphatic amine salts, aromatic amine adducts and aromatic amine salts.

The dry fibrous layer is fibrous material such as glass fibre, aramid, PAN or pitch based carbon fibre.

The length of the recess is preferably selected to be 10 - 75mm. More preferably the length of the recess is preferably selected to be 20-40mm.

According to a second aspect of the present invention there is provided a composite material which comprises an assembly of a plurality of moulding materials according to the first aspect of the present invention, the assembly comprising a continuous array of the moulding materials, the peripheral edge of each moulding material contacting an adjacent moulding material of the array and the surface resin material layers being arranged on a common face of the assembly, wherein the composite material is assembled by overlapping the plurality of moulding materials such that an elongate edge of one moulding material is received in the stepped recess of an adjacent moulding material whereby the surface resin material layer of the one moulding material is conjoined to the dry fibrous reinforcement layer of the adjacent moulding material.

The composite material of the second aspect may be used as the surface coating for a large component, in particular a wind turbine, marine craft or architectural moulding.

According to a third aspect of the present invention there is provided a method of manufacturing a fibre-reinforced composite moulding, the method comprising the steps of: (a) disposing a plurality of moulding material segments on a mould surface to form a continuous array of segments on the mould surface, each segment comprising a surface resin material layer and a dry fibrous reinforcement layer over the surface resin material layer, wherein the continuous array is assembled by overlapping the plurality of segments such that at least one elongate edge of each segment overlaps an adjacent segment whereby the surface resin material layer of each segment overlies an elongate edge of the dry fibrous reinforcement layer of the adjacent segment; (b) providing a structural resin material layer over the dry fibrous reinforcement layer, (c) heating the assembly to cause the structural resin to flow into and impregnate the dry fibrous reinforcement; and (d) curing the surface and structural resin materials to form the fibre-reinforced composite moulding which comprises a surface portion formed from the surface resin material layer laminated to a structural portion formed from the at least one layer of fibrous reinforcing material and the structural resin.

Preferably, each segment comprises at least one dry fibrous reinforcement layer having a surface resin material layer conjoined to a first surface thereof and a structural resin material layer conjoined to a second surface thereof, wherein an elongate edge of the structural resin material layer is located inwardly of an adjacent elongate edge of at least the surface resin material layer to provide a stepped configuration in which the structural resin material is provided with a stepped recess which is free from resin and is located at the edge of the structural resin layer; and steps (a) and b) are carried out by assembling the plurality of the moulding materials in the mould, the assembly comprising a continuous array of the moulding materials, the peripheral edge of each moulding material contacting an adjacent moulding material of the array and the surface resin material layers being arranged on a common face of the assembly adjacent to a mould surface, wherein the continuous array is assembled by overlapping the plurality of moulding materials such that an elongate edge of one moulding material is received in the stepped recess of an adjacent moulding material whereby the surface resin material layer of the one moulding material is conjoined to the dry fibrous reinforcement layer of the adjacent moulding material.

Preferably, the overlap between adjacent segments has a width of from 10 to 75 mm, more preferably from 20 to 40 mm. The segments preferably overlap on opposing edges. The surface resin material layer typically has a thickness of from 100 to 400 microns, more preferably from 100 to 300 microns, yet more preferably from 170 to 270 microns, and/or an applied weight thickness of from 100 to 400 grams pre square metre (gsm). Most preferably, the surface resin material layer is supported on a carrier of a sheet material, which may preferably have a weight of from 10 to 90gsm, more preferably from 20 to 50gsm. The sheet material of the surface resin material layer may comprise a polymer or glass scrim material, more preferably a polyester scrim material, yet more preferably a polyester spun bonded scrim material. Preferably, the sheet material of the surface resin material layer is located at or proximal to a first face of the surface resin material layer. The first face of the surface resin material layer is preferably remote from the mould surface in disposing step (a) so that a majority of the surface resin material is between the sheet material and the mould surface.

At least one dry fibrous reinforcement layer of fibrous reinforcing material may comprise a plurality of stacked dry fibrous reinforcement layers, at least a lower layer being coextensive with the surface resin material layer and at least an upper layer being coextensive with the structural resin material layer. Preferably, at least one of the plurality of dry fibrous reinforcement layers comprises oriented fibres. More preferably, at least one of the plurality of stacked dry fibrous reinforcement layers comprises oriented fibres having a first orientation and at least one of the plurality of stacked dry fibrous reinforcement layers comprises oriented fibres having a second orientation.

Preferably, the surface resin material and the structural resin material cure at least partially simultaneously in the curing step (d).

The surface resin material and the structural resin material may have different viscosities. Preferably, the structural resin material has a higher viscosity than that of the surface resin material at room temperature (20°C). The ratio of the viscosity, measured at 20°C ambient temperature, of the structural resin material and of the surface resin material is typically from 2 to 14/1, more preferably from 4 to 12/1. The surface resin material preferably has a higher viscosity than that of the structural resin material during the heating step (c). The ratio of the viscosity, during the heating step (c), of the surface resin material and of the structural resin material may be from 5 to 25/1, more preferably from 10 to 15/1.

Preferably, in the curing step (d) the curing reaction of the structural resin material is exothermic which generates heat which accelerates the curing of the surface resin material.

The surface resin material and the structural resin material may be thermosetting epoxy resins. The surface resin material typically has a viscosity of from 0.1x10⁵ to 5x10⁵ Pa.s measured at 20°C and/or the structural resin material typically has a viscosity of from 0.75x10⁵ to 5x10⁶ Pa.s measured at 20°C.

In this specification the resin viscosity is measured using a TA Instruments AR2000 rheometer with a 20mm diameter steel plate and a Peltier cooling system. The experiment was carried out under the following conditions: oscillation experiment from 40°C down to 0°C at 2°C/min with a controlled displacement of 1x10⁻⁴ rads at a frequency of 1 Hz and a gap of 1000µm.

The present invention also provides in a further aspect a fibre-reinforced composite moulding comprising a surface portion laminated to a structural portion, the surface portion being formed of a surfacing layer comprising a plurality of surfacing layer segments moulded together to form a continuous surfacing layer, the surfacing layer comprising a first cured resin material supported on a carrier of a sheet material, and the structural portion being formed from at least one layer of fibrous reinforcing material and a cured second resin material, at least one layer of the fibrous reinforcing material being formed of a plurality of segments each of which overlies a respective surfacing layer segment, and each surfacing layer segment overlapping an adjacent segment of the fibrous reinforcing material.

In a preferred embodiment of the present invention there is provided a thermoset fibre reinforced structural moulding material containing an integrated surface primer resin layer with air venting properties that enables faster production of large painted moulded composite parts. It gives a defect free surface form vacuum bag processing that is easy to prepare for painting. The material itself contains a layer of thermosetting surface resin, dry reinforcement fibre, and thermosetting structural resin. It contains a recess at one edge which is free of structural resin in order to increase the total air venting properties of the overlapped pieces of the material to achieve a defect free surface finish when a large component is to be formed from many overlapping pieces of material to cover the full surface of the mould. This recess can be in the range 10-75mm with a preferable size being 20-40mm.

This preferred embodiment is tolerant to handling pressure and is stable enough to be provided on large rolls without losing its air venting properties. It provides a high quality surface direct from the mould, which only requires minimal sanding prior to painting. Considerable time and cost is saved in the production process as this material replaces the first structural layer and gelcoat layer. The material requires no de-bulking operations to remove trapped air and is cured at the same time as the main laminate saving further time in the manufacturing process.

In the material of the present invention a good surface finish is obtained without the need for additional tissues and high cost fine weave fabrics enabling lower cost heavier weight reinforcement to be used as the first ply into the mould. This makes the material particularly suitable for the production of wind-turbine aerofoil sections and any other large components with simpler curvature such as marine craft, ray-domes, architectural mouldings and bridges. The heavier weight version (600gsm fibre layer and above) is not suitable for more complex parts, like automotive door wings, which require the material to be cut and draped around tight detailed features.

The term 'conjoin' is used herein to mean that when two layers are brought together, e.g. a fibrous layer and a resin layer, there is essentially no impregnation between said layers.

Example embodiments of the invention will now be described, by way of example only, with reference to the accompanying Figures, in which;
Figure 1 illustrates a cross-sectional view of a moulding material in accordance with the present invention;
Figure 2 illustrates a cross-sectional view of an alternative embodiment of the moulding material in accordance with the present invention;
Figure 3 illustrates two pieces of the material of the present invention overlapping each other;
Figure 4 illustrates a number of the possible pathways for removing air from the material of Figure 3; and
Figure 5 illustrates the material of the present invention in the form in which it is manufactured;
Figure 6 illustrates a sample of the material of the present invention having the improved surface quality;
Figure 7 illustrates the defects which result from using a surface film having a high viscosity;
Figure 8 illustrates the relative difference between a working system (SPX13734) and a non working system (SF2); and
Figure 9 illustrates the cold flow resistance improvement of resins versus temperature.

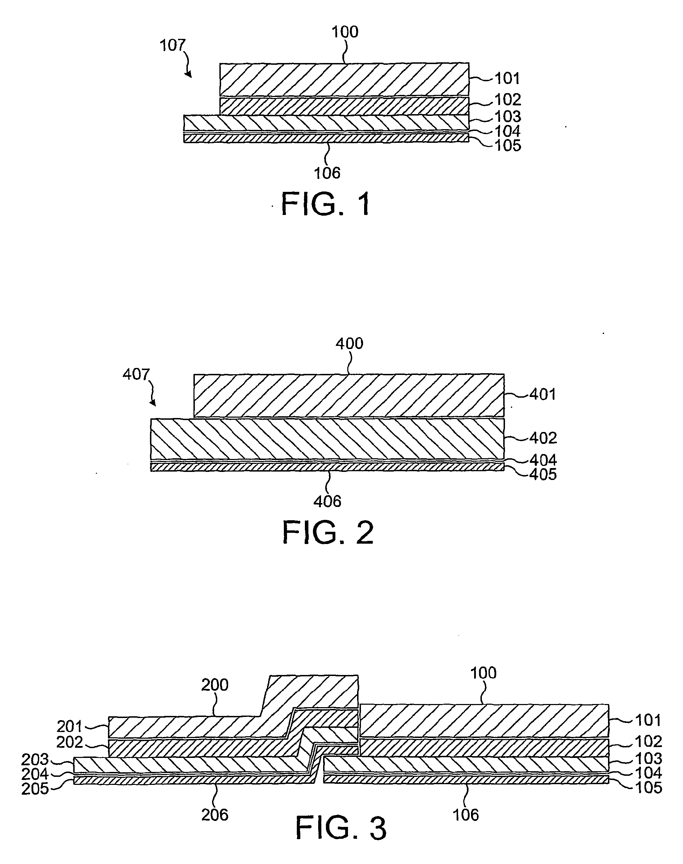

Referring to Figure 1, there is provided a layer of material 100 which contains surfacing resin 106, reinforcing fibres 102 and 103, and the structural resin 101 for impregnating the reinforcing fibres 102 and 103.

Additional layers of pre-preg or SPRINT® material and other materials such as foam core can then be added to complete the laminate stack.

The surfacing layer 106 contains surfacing resin 105 and a polyester veil 104. During manufacture of the material the polyester veil 104 is first applied to the top of the surface resin 104. Some pressure is the applied to push the polyester veil 104 into the top of the surface resin 105 and also some of the surface resin 105 into the fibre layer 103 to ensure the surface material 106 stays fixed to the fibre layer.

Sufficient structural resin 101 is applied to the top of the fibre layers 102 and 103 to fully impregnate the fibre when the material is later cured using heat and a vacuum bag process. This structural resin has a very high viscosity at room temperature to prevent it impregnating the fibre layers 102, 103. A suitable material is the Gurit WT93 resin system which as a viscosity of around 1 x 10⁶ Pa.s at 20°C. On applying heat the resin 101 drops sufficiently in viscosity, typically to 3 Pa.s, to then fully impregnate the fibre layers 102, 103 during a 85°C or 120°C cure cycle.

It is also possible to use a lower viscosity pre-preg system such as WE92 which has a viscosity of around 1 x 10⁵ Pa. at 20°C. This resin system impregnates the dry fibre layers approximately 10 x faster than the higher viscosity WT93 system. This reduces the time the material can be left unfrozen in the workshop prior to use without the venting structure starting to become blocked due to the resin migration and impregnation of the fibrous venting layers.

The material 100 contains a region 107, which has no structural resin 101 and in the example shown also contains reduced thickness of fibre reinforcement. In the material 100 only fibre layer 103 and surfacing layer 106 continue to the edge of the material beneath the region 107.

Figure 2 shows an alternative material 400 where all the fibre reinforcement continues to the edge.

When assembling the material onto a mould each piece of material 100 is overlapped so that the new surface material 206 overlaps onto the dry fibre layer 103. This is a particularly advantageous format if the fibre layer is a stitched tri-axial fabric such as Gurit YE900 or Y1200. In example shown in Figure 3 the material layers 103 and 203 are constructed from +/-45° fibres, and layers 102 and 202 are uni-directional fibres all stitched together to form a multi-axial fabric. To achieve a structural load transfer between the two pieces of reinforcement it is necessary to overlap only the +/-45° fibres. The 0° fibres can be butt jointed together. In this format the narrower width of the 0° uni-directional fibre gives a less pronounced increase in thickness and the advantage of a smoother overlap.

The same method of overlapping the material is also used with the alternative configuration of material 400 which does not contain the reduction in fibre layer, such as woven cloth, or chop strand matt fabric. This is because, in general, in fibre composites an overlap is used for load transfer unless the material contains uni-directional (0°) fibre which runs in same direction as the overlap. The present invention is not limited to glass fibre reinforcements. Other fibres such as aramid, carbon, or natural fibres can be used.

The dry reinforcement layers 102, 103, 202 and 203 provide one or more highly permeable air venting paths to remove air when a vacuum is applied to the laminate stack. As the pieces of material are overlapped the surface layer 206 is now in connection with the highly air permeable dry fibre layer 103 allowing a more direct and effective air path to the vacuum source.

The zone 107 which is free from structural resin allows more effective connection of the dry reinforcement to give a highly permeable venting structure. The continuous surface resin 106 prevents defects occurring at the point of overlap of the material.

The zone 107 is an important feature of the present invention, and is necessary for heavier weight fabrics above 600gsm, so that as the resin film 101 becomes thicker and less air permeable there is sufficient resin to impregnate the structural fibre 102,103. Without zone 107 the air permeability across the overlapped fabric is reduced leading to defects in larger components.

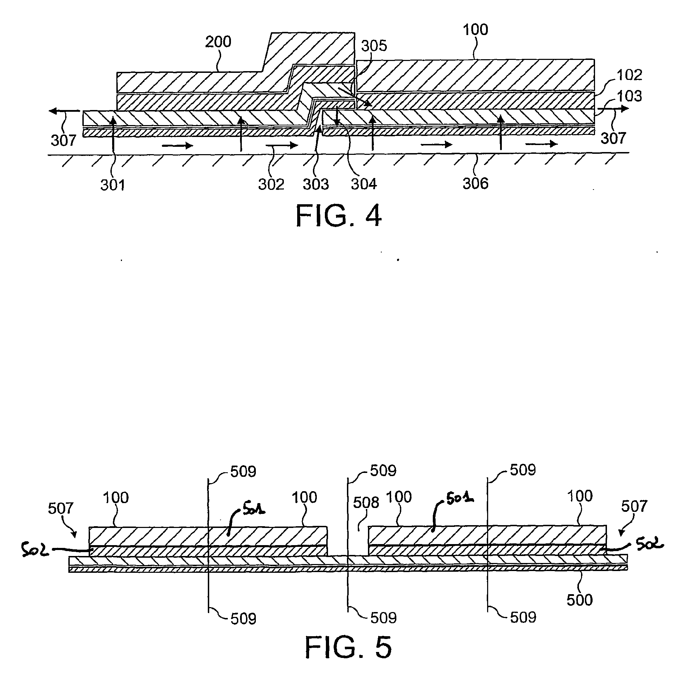

In the present invention it is preferred that the thickness of the surface film resin 106 is between 100 and 400 microns, more preferably from 100 to 300 microns, yet more preferably from 170 to 270 microns. Within this thickness range it has been found the resin can be made partially air permeable. Figure 4 shows that the air 301 between the mould surface 306 and the surface layer 106 can pass through the surface layer 106 and into the more highly air permeable dry fibre layers 102 and 103, to then be drawn away into the vacuum source 307. In the material of the present invention it is not essential that an air breathing scrim is provided at the tool surface. This means the tack of the material is more consistent and dependent only on the resin formulation of the surface resin 105 which allows it to be formulated to give the desired and consistent tack level. In addition, the material is more tolerant to handling pressure as the venting channels are not closed by handling pressure, or the pressure generated when the product is wound onto a roll. As a result the material of the present invention has extended room temperature storage prior to use.

Air 302 can also escape by moving between the tool surface 306 and the surface of the surface resin layer 106, 206 towards and into the dry fibre 102 and 103. This air path 302, 303, 304 is made more permeable by the absence of the structural resin 101 in the zones 107 and 207. The air flows directly into the highly permeable dry fibre 102, 103 and does not have to pass through the thick resin layer 101 which would greatly reduce the flow and stop effective air transport on larger parts containing multiple overlaps of material.

The viscosity and the reactivity of the surface resin 105 in the surface layer 106 are higher than the structural resin 101. This ensures the surface resin 105 stays closer to the tool surface 306 to maintain the thickness of the surface layer 106 in the final component.

Both resins are preferably formulated to be a thermosetting epoxy resin with a latent curing agent, which is activated by heat. Other thermosetting resins may be used; such as those derived from cyanate ester and phenolic systems. Suitable epoxy resins include diglycidyl ethers of bisphenol A, diglycidyl ethers of bisphenol F, epoxy novolac resins and N-glycidyl ethers, glycidyl esters, aliphatic and cycloaliphatic glycidyl ethers, glycidyl ethers of aminophenols, glycidyl ethers of any substituted phenols and blends thereof. Also included are modified blends of the aforementioned thermosetting polymers. These polymers are typically modified by rubber or thermoplastic addition. Any suitable catalyst may be used. The catalyst will be selected to correspond to the resin used. One suitable catalyst for use with an epoxy resin is a dicyandiamide curing agent. The catalyst may be accelerated. Where a dicyandiamide catalyst is used, a substituted urea may be used as an accelerator. Suitable accelerators include Diuron, Monuron, Fenuron, Chlortoluron, bis-urea of toluenedlisocyanate and other substituted homologues. The epoxy curing agent may be selected from Dapsone (DDS), Diaminodiphenyl methane (DDM), BF3-amine complex, substituted imidazoles, accelerated anhydrides, metaphenylene diamine, diaminodiphenylether, aromatic polyetheratnines, aliphatic amine adducts, aliphatic amine salts, aromatic amine adducts and aromatic amine salts.

If the resin layer 105 is too thin then a sufficient thickness barrier is not obtained between the fibre reinforcement and the paint causing a print pattern on the surface. If the layer is too thin, this can lead to dry fibre close to the surface which can cause problems when sanding the surface prior to painting. The resulting dry glass fibre particles get trapped on the abrading disc and are very abrasive leading to scratch marks requiring repeated abrasive disc changes and additional filling and fairing repair steps prior to painting.

The fine polyester scrim 104 within the surface film layer 106 serves two purposes. It helps prevent fibres from the reinforcement entering the surface resin layer 106. The fine weave layer also helps prevent the resin 105 in the surface film layer reticulating off the tool surface giving a better quality of finish. The polyester scrim itself is easy to sand and does not result in abrasive particles damaging the surface.

As well as providing a thickness buffer to avoid fibre print the surface resin layer 106 provides a protective barrier for reducing moisture ingress into the laminate. Glass fibre strands close to the surface can accelerate moisture ingress by a wicking mechanism. The surface resin 105 is toughened and the modulus reduced which is a particular advantage as this helps to prevent cracks from the mismatch in thermal expansion between the paint and the laminate. The tailored surface resin helps improve paint chipping that occurs in impact situations. Due to the venting structure the trapped air is removed by the application of vacuum to the material and the cured surface layer is virtually free of voids, which also have been found to reduce the rate of coating erosion.

For easier handling during fitting into a mould it can be desirable to have narrow strips of this material. Figure 5 shows an economic method of producing 4 narrow strips of the material 100 from an industry standard 1270mm width of multi-axial fibre cloth 502 to maximise the output of a resin coater designed for coating resin onto this width of fabric. The structural resin 501 was cast onto the fabric with various drop out zones 507, 508. The distance represented by 508 is twice the distance of 507. After manufacture the material 500 was then cut at positions 509 to give 4 pieces of the material 100. The present invention is not restricted to producing a material having 4 evenly sized strips, as it is possible to use the method to produce many different combinations of fabric widths by adding the appropriate the resin free zones to give the desired width pieces.

### Example 1

A modified film coater was used to apply a Gurit 707gsm WT93 structural epoxy pre-preg resin film (101) to a 1260mm wide Gurit YE900 tri-axial fabric containing 450gsm of +/45 glass fibre (103) and 450gsm of 0 glass fibre (102). Areas free of structural resin, zones 507 and 508, were created by placing dams in the coating machine to prevent depositing resin in these areas. Zone 507 was 35mm wide, zone 508 was 70mm wide. The coating machine also applied a continuous 220 micron layer of Gurit toughened epoxy resin SPX13734 (105) containing a Gurit RP35, a 35gsm spunbonded polyester scrim to the reverse side of the glass fibre. 100 micron MDPE backers where then applied to encapsulate the product and protect it from dirt and the product was wound up onto a 322mm outer diameter tube.

The material was then tested as manufactured and material tested after being left for 4 weeks on the roll original product roll at 20°C to check if any pre-impregnation had occurred reducing its air venting performance.

The material was then cut into 4 strips of 315mm width as detailed Figure 5, with one edge 35mm free of structural resin, and applied to an 8.5m marine RIB deck composite mould. The material was overlapped as described in Figure 3 allowing for error (+/-10mm) to test the tolerance of the system to slightly misaligned overlaps. Three of the four edges were sealed to simulate an even larger part forcing the air to have to travel a longer path back to a single edge. On this edge a Gurit WT93/XE 600 35% SS glass biax was cloth and a peel ply were used to provide a good venting air path to the vacuum source.

A layer of Gurit WE92/YE1200/TEA50/1260/43 +/-3 prepreg was then applied, and several pieces of K500 25mm saw cut Corecell core with chamfered edges applied on top of this layer. To increase the severity of the test several core pieces were used to increase the number of core edges to test these transition points at the edges of the core panel were known to promote the formation of defects. Core is also known to increase the likely-hood of defects at overlap. The laminate was competed using 2 more layers of Gurit. WE92/YE1200/TEA50/1260/43 +/-3. A standard vacuum consumable pack consisting of P3 perforated release film, breather cloth, and a vacuum bag was applied. The material was then cured for 85°C for 90 minutes followed by a further cure at 120°C for 90mins.

The composite was free of surface defects on de-moulding.

The test was successfully repeated for the material that had been allowed to stand for 4 weeks on the roll at 20°C. Due to the resin formulation and construction the material retained its venting structure and again gave a successful moulding again free of surface defects.

### Example 2

To simulate the production of a wind turbine shell a test tool was used where a 3m wide section was laminated using 11 strips of the 315mm wide material described in example 2. Three of the four edges were again sealed so that any trapped air would have to travel across the overlaps to escape the laminate. This test was developed to better simulate a wind turbine section, which is many times greater in length than width. As such significant drop in vacuum can occur along the length and in order to account for limited air-venting along the length, and wider parts, air was only allowed to flow to escape across the width of the material in one direction.

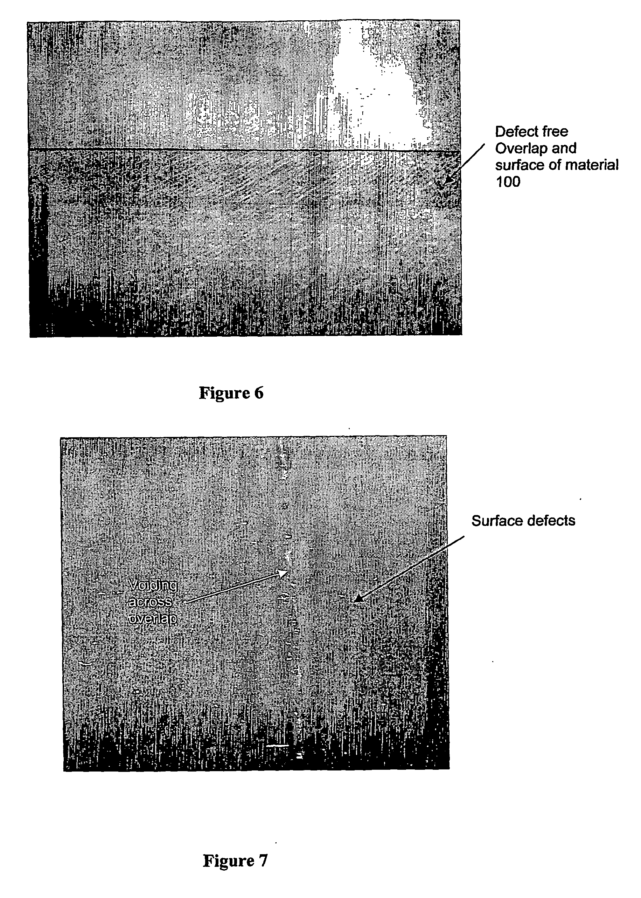

Figure 6 shows the excellent surface quality even at the furthest point of from the vacuum source.

The panel was then prepared for painting with the following surface preparation;
- Degrease panels
- Sand P280
- Degrease

A DuPont Primer: PercoTex LA-Haft- Grund 040 10/1 (wt) with hardener 4060 was applied followed by a Topcoat: Percotex Rotorlack 680 4/1 (wt) with hardener 3880. This was then tested and passed the following DuPont Standards

| Du Pont Standard | Initial Tests | Humidity resistance: DIN 50017: 240hrs at 40°C and 100% | Temperature shock test: VW-P1200: |
|---|---|---|---|
| Adhesion test: gitterschnitt ISO 2409 | Gt3 | Gt2 | Gt2-3 |
| Adhesion: scratch test: DBL 7399 - 5.1 | KO | KO | KO |
| Pull off test according ISO | 1.9 N/mm2 | 2.2 N/mm2 | 1.1 N/min2 |
| 24624 | 2.6 N/mm2 | | |
| Stone chip test: DBL 7399 - 5.3.2: | K1.5 | Not tested | Not tested |

### Example 3

During development various resin systems were experimented for use as the surface layer. Figure 7 shows the results of the test defined in example 2 when using the SF2 system for the surface layer 106. Voids were formed around the overlap region as the resin was too viscous to flow into the gaps. When the WT93 resin was used for the surface layer pin-holes were formed on the surface.

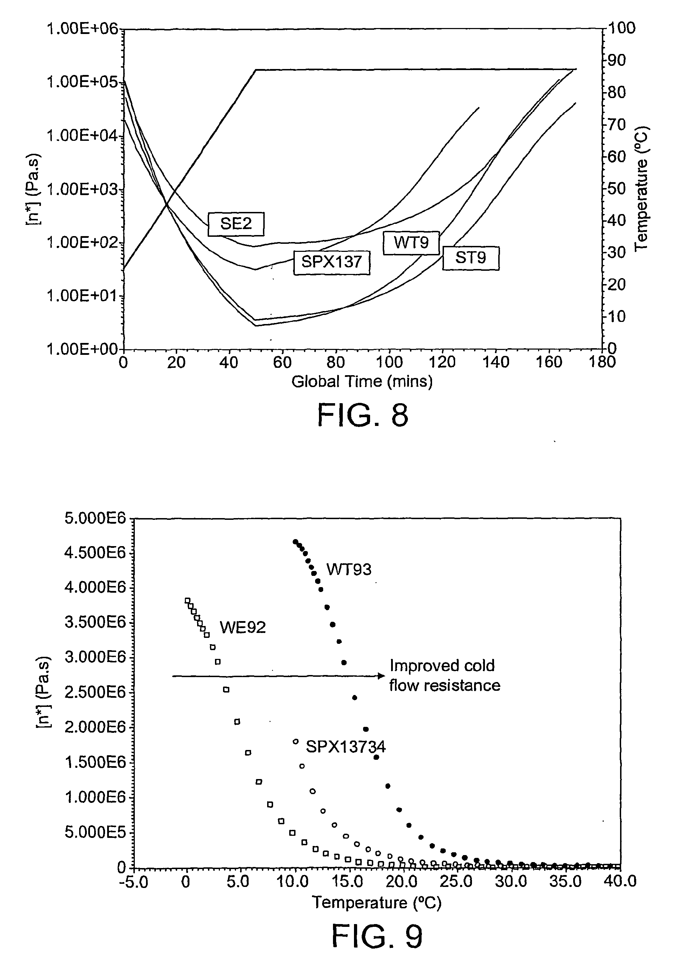

Resin viscosity and the difference in the viscosity between the surface film resin (105) and structural resin (106) is an important feature of the present invention. Figure 8 shows the relative difference between a working system (SPX13734) and non working SF2 for the cure cycle defined above. A working system has a high viscosity at the beginning of the cure (or at storage or conditioning temperature) and a very low minimum viscosity during the cure which improves the impregnation of the fibre. SPX13734 and SF2 have a high viscosity at the beginning of the cure and SPX13734 has a lower minimum viscosity than SF2 during the cure: this explains why SPX13734 is a working system and SF2 is a non-working system. Materials with different viscosity profiles can be made to work by adjusting the cure cycle provided a differential viscosity exists between the surface resin layer (105) and structural resin (101).

## Claims

1. A moulding material (100) comprising at least one dry fibrous reinforcement layer (102,103) having a surface resin material layer (105) conjoined to a first surface thereof and a structural resin material layer (101) conjoined to a second surface thereof, **characterised in that** an elongate edge of the structural resin material layer (101) is located inwardly of an adjacent elongate edge of at least the surface resin material layer (105) to provide a stepped configuration in which the structural resin material (101) is provided with a stepped recess which is free from resin and is located at the edge of the structural resin layer (101).

2. A moulding material as claimed in Claim 1 wherein the dry fibrous reinforcement layer (102,103) adjacent to the structural resin material layer (101) has an elongate edge aligned with the elongate edge of the structural resin material (101) whereby the stepped configuration is provided with a stepped recess (107) of the said dry fibrous reinforcement layer (102,103) having the same dimensions as the stepped recess of the structural resin material (101).

3. A moulding material as claimed in Claim 1 or Claim 2 wherein the surface resin material layer (105) is air permeable.

4. A moulding material as claimed in Claim 3 wherein the thickness of the surface resin material layer (105) is 100-400 microns, optionally 170-270 microns.

5. A moulding material as claimed in any one of the preceding Claims wherein the surface resin material layer (105) is provided with a layer of scrim material (104), optionally wherein the scrim layer (104) is a polyester material, further optionally a polyester spun bonded scrim material.

6. A moulding material according to Claim 5 wherein the layer of scrim material (104) is located at or proximal to a first face of the surface resin material layer (105) that is conjoined to the at least one dry fibrous reinforcement layer (102,103) so that a majority of the surface resin material (105) is between the layer of scrim material (104) and a second, free, surface of the surface resin material (105).

7. A moulding material as claimed in any one of the preceding Claims wherein the width of the stepped recess is 10 - 75mm, optionally 20 - 40mm.

8. A moulding material as claimed in any one of the preceding Claims wherein the stepped recess extends along the length of an elongate edge of the moulding material (100).

9. A moulding material according to any one of the preceding Claims wherein the ratio of the viscosity, measured at 20°C ambient temperature, of the structural resin material (101) and of the surface resin material (105) is from 2 to 14/1.

10. A composite material which comprises an assembly of a plurality of moulding materials according to any one of the preceding Claims, the assembly comprising a continuous array of the moulding materials (100), the peripheral edge of each moulding material (100) contacting an adjacent moulding material of the array and the surface resin material layers (105) being arranged on a common face of the assembly, wherein the composite material is assembled by overlapping the plurality of moulding materials (100) such that an elongate edge of one moulding material (100) is received in the stepped recess of an adjacent moulding material (100) whereby the surface resin material layer (105) of the one moulding material is conjoined to the dry fibrous reinforcement layer (102,103) of the adjacent moulding material (100).

11. A method of manufacturing a fibre-reinforced composite moulding, the method comprising the steps of:
(a) disposing a plurality of moulding material segments on a mould surface (306) to form a continuous array of segments on the mould surface (306), each segment comprising a surface resin material layer (105) and a dry fibrous reinforcement layer (102,103) over the surface resin material layer (105), wherein the continuous array is assembled by overlapping the plurality of segments such that at least one elongate edge of each segment overlaps an adjacent segment whereby the surface resin material layer (105) of each segment overlies an elongate edge of the dry fibrous reinforcement layer of the adjacent segment;
(b) providing a structural resin material layer (101) over the dry fibrous reinforcement layer (102,103),
(c) heating the assembly to cause the structural resin (101) to flow into and impregnate the dry fibrous reinforcement (102,103); and
(d) curing the surface and structural resin materials (105, 101) to form the fibre-reinforced composite moulding which comprises a surface portion formed from the surface resin material layer (105) laminated to a structural portion formed from the at least one layer of fibrous reinforcing material (102, 103) and the structural resin (101).

12. A method according to Claim 11 wherein each segment comprises at least one dry fibrous reinforcement layer (102,103) having a surface resin material layer (105) conjoined to a first surface thereof and a structural resin material layer (101) conjoined to a second surface thereof, wherein an elongate edge of the structural resin material layer (101) is located inwardly of an adjacent elongate edge of at least the surface resin material layer (105) to provide a stepped configuration in which the structural resin material (101) is provided with a stepped recess (107) which is free from resin and is located at the edge of the structural resin layer (101); and
wherein steps (a) and (b) are carried out by assembling the plurality of the moulding materials in the mould, the assembly comprising a continuous array of the moulding materials, the peripheral edge of each moulding material contacting an adjacent moulding material of the array and the surface resin material layers (105) being arranged on a common face of the assembly adjacent to a mould surface (306), wherein the continuous array is assembled by overlapping the plurality of moulding materials such that an elongate edge of one moulding material is received in the stepped recess (107) of an adjacent moulding material whereby the surface resin material layer (105) of the one moulding material is conjoined to the dry fibrous reinforcement layer (102,103) of the adjacent moulding material.

13. A method according to Claim 12 wherein the overlap between adjacent segments has a width of from 10 to 75 mm, optionally from 20 to 40 mm.

14. A method according to Claim 12 or Claim 13 wherein the surface resin material layer (105) is supported on a carrier of a sheet material (104), wherein the sheet material (104) of the surface resin material layer is located at or proximal to a first face of the surface resin material layer (105), optionally wherein first face of the surface resin material layer (105) is remote from the mould surface (306) in disposing step (a) so that a majority of the surface resin material (105) is between the sheet material (104) and the mould surface (306).

15. A method according to Claim 13 or Claim 14 wherein the at least one dry fibrous reinforcement layer (102,103) of fibrous reinforcing material comprises a plurality of stacked dry fibrous reinforcement layers (102,103), at least a lower layer (102) being coextensive with the surface resin material layer (103) and at least an upper layer (103) being coextensive with the structural resin material layer (101).

16. A method according to any one of Claims 11 to 15 wherein the ratio of the viscosity, measured at 20°C ambient temperature, of the structural resin material (101) and of the surface resin material (105) is from 2 to 14/1.

17. A method according to Claim 16 wherein the ratio of the viscosity, during the heating step (c), of the surface resin material (105) and of the structural resin material (101) is from 5 to 25/1, and optionally in the curing step (d) the curing reaction of the structural resin material (101) is exothermic which generates heat which accelerates the curing of the surface resin material (105).

## Patentansprüche

1. Formmaterial (100) umfassend wenigstens eine Trockenfaser-Verstärkungsschicht (102, 103) mit einer Oberflächenharzmaterialschicht (105), die mit einer ersten Oberfläche der Verstärkungsschicht verbunden ist, und mit einer Strukturharzmaterialschicht (101), die mit einer zweiten Oberfläche der Verstärkungsschicht verbunden ist, **dadurch gekennzeichnet, dass** eine Längskante der Strukturharzmaterialschicht (101) zu einer benachbarten Längskante zumindest der Oberflächenharzmaterialschicht (105) so nach innen hin versetzt ist, dass eine gestufte Anordnung entsteht, in der das Strukturharzmaterial (101) eine stufenförmige Aussparung aufweist, die von Harz frei ist und sich an der Kante der Strukturharzmaterial-schicht (101) befindet.

2. Formmaterial nach Anspruch 1, wobei die Trockenfaser-Verstärkungsschicht (102, 103) angrenzend zur Harzmaterial-Strukturschicht (101) eine längliche Kante aufweist, welche bündig mit der Längskante des Strukturharzmaterials (101) angeordnet ist, wodurch die gestufte Anordnung eine stufenförmigen Aussparung (107) in der Trockenfaser-Verstärkungsschicht (102, 103) umfasst, welche dieselben Abmessungen aufweist wie die stufenförmige Aussparung des Strukturharzmaterials (101).

3. Formmaterial nach Anspruch 1 oder Anspruch 2, wobei die Oberflächenharzmaterialschicht (105) luftdurchlässig ist.

4. Formmaterial nach Anspruch 3, wobei die Dicke der Oberflächenharzmaterialschicht (105) 100-400 Mikrometer, und wahlweise 170-270 Mikrometer, beträgt.

5. Formmaterial nach einem der vorhergehenden Ansprüche, wobei die Oberflächenharzmaterialschicht (105) mit einer Schicht aus Gittergewebematerial (104) versehen ist, wobei die Gittergewebeschicht (104) wahlweise ein Polyestermaterial und außerdem wahlweise ein im Spinnvliesverfahren aus Polyester hergestelltes Gittergewebematerial ist.

6. Formmaterial nach Anspruch 5, wobei sich die Gittergewebematerialschicht (104) an oder nahe einer ersten Oberfläche der Oberflächenharzmaterialschicht (105) befindet, welche mit wenigstens einer Trockenfaser-Verstärkungsschicht (102, 103) so verbunden ist, dass ein Großteil des Oberflächenharzmaterials (105) zwischen der Gittergewebematerialschicht (104) und einer zweiten, freiliegenden Oberfläche des Oberflächenharzmaterials (105) liegt.

7. Formmaterial nach einem der vorhergehenden Ansprüche, wobei die Breite der stufenförmigen Aussparung 10 - 75 mm, und wahlweise 20 - 40 mm beträgt.

8. Formmaterial nach einem der vorhergehenden Ansprüche, wobei sich die stufenförmige Aussparung über die Länge einer Längskante des Formmaterials (100) hinweg erstreckt.

9. Formmaterial nach einem der vorhergehenden Ansprüche, wobei das Verhältnis zwischen der Viskosität des Strukturharzmaterials (101) und der des Oberflächenharzmaterials (105), gemessen bei 20°C Raumtemperatur, 2 bis 14/1 beträgt.

10. Verbundmaterial, welches einen Aufbau aus einer Vielzahl von Formmaterialien gemäß einem der vorhergehenden Ansprüche umfasst, wobei der Aufbau eine durchgängige Anordnung von Formmaterialien (100) umfasst, die Umfangskante jedes Formmaterials (100) mit einem benachbarten Formmaterial der Anordnung in Kontakt steht und die Oberflächenharzmaterialschichten (105) auf einer gemeinsamen Oberfläche der Anordnung angeordnet sind, wobei das Verbundmaterial durch Überlappen der Vielzahl von Formmaterialien (100) in einer solchen Weise zusammengefügt wird, dass eine Längskante eines Formmaterials (100) von der stufenförmigen Aussparung eines benachbarten Formmaterials (100) aufgenommen wird, wodurch die Oberflächenharzmaterialschicht (105) des einen Formmaterials mit der Trockenfaser-Verstärkungsschicht (102, 103) des benachbarten Formmaterials (100) verbunden wird.

11. Verfahren zur Herstellung eines faserverstärkten Verbundformteils, wobei das Verfahren die folgenden Schritte umfasst:
a) Anordnen einer Vielzahl von Formmaterialsegmenten auf einer Formoberfläche (306) zur Bildung einer durchgängigen Anordnung von Segmenten auf der Formoberfläche (306), wobei jedes Segment eine Oberflächenharzmaterialschicht (105) und eine oberhalb der Oberflächenharzmaterialschicht (105) befindliche Trockenfaser-Verstärkungsschicht (102, 103) umfasst, wobei die durchgängige Anordnung durch Überlappen der Vielzahl von Segmenten in einer solchen Weise gebildet wird, dass wenigstens eine Längskante jedes Segments ein benachbartes Segment überlappt, wodurch die Oberflächenharzmaterialschicht (105) jedes Segments eine Längskante der Trockenfaser-Verstärkungsschicht des benachbarten Segments überdeckt;
b) Vorsehen einer Strukturharzmaterialschicht (101) oberhalb der Trockenfaser-Verstärkungsschicht (102, 103),
c) Erwärmen der Anordnung, um zu bewirken, dass das Strukturharz (101) in die Trockenfaserverstärkung (102, 103) fließt und diese imprägniert; und
d) Aushärten der Oberflächen- und Strukturharzmaterialien (105, 101) zur Bildung des faserverstärkten Verbundformteils, welches einen Oberflächenbereich umfasst, der aus der Oberflächenharzmaterialschicht (105) besteht, welche an einem Strukturbereich anlaminiert ist, der aus der wenigstens einen Schicht aus Faserverstärkungsmaterial (102, 103) und dem Strukturharz (101) besteht.

12. Verfahren nach Anspruch 11, wobei jedes Segment wenigstens eine Trockenfaser-Verstärkungsschicht (102, 103) umfasst, die eine mit einer ersten Oberfläche der Trockenfaser-Verstärkungsschicht verbundene Oberflächenharzmaterialschicht (105) und eine mit einer zweiten Oberfläche der Trockenfaser-Verstärkungsschicht verbundene Strukturharzmaterial-schicht (101) aufweist, wobei eine Längskante der Strukturharzmaterial-schicht (101) relativ zu einer benachbarten Längskante wenigstens der Oberflächenharzmaterialschicht (105) nach innen hin versetzt ist, um eine stufenartige Anordnung zu bilden, in der das Strukturharzmaterial (101) mit einer stufenartigen Aussparung (107) versehen ist, welche frei von Harz ist und sich an der Kante der Strukturharzschicht (101) befindet; und
wobei die Schritte a) und b) durchgeführt werden, indem die Vielzahl von Formmaterialien in der Form zusammengefügt wird, wobei der Aufbau eine kontinuierlichen Anordnung aus den Formmaterialien umfasst, wobei die Umfangskante jedes Formmaterials mit einem benachbarten Formmaterial der Anordnung in Kontakt steht und die Oberflächenharzmaterial-schichten (105) auf einer gemeinsamen Oberfläche der Anordnung benachbart zu einer Formoberfläche (306) angeordnet sind, wobei die durchgängige Anordnung durch ein Überlappen der Vielzahl von Formmaterialien in einer solchen Weise hergestellt wird, dass eine Längskante eines Formmaterials von der stufenförmigen Aussparung (107) eines benachbarten Formmaterials aufgenommen wird, wodurch die Oberflächenharzmaterialschicht (105) des einen Formmaterials mit der Trockenfaser-Verstärkungsschicht (102, 103) des benachbarten Formmaterials zusammengefügt wird.

13. Verfahren nach Anspruch 12, wobei der Überlappungsbereich benachbarter Segmente eine Breite von 10 bis 75 mm, wahlweise von 20 bis 40 mm aufweist.

14. Verfahren nach Anspruch 12 oder 13, wobei sich die Oberflächenharzmaterialschicht (105) auf einem Träger aus einem bahnförmigen Material (104) gelagert ist, wobei das bahnförmige Material (104) der Oberflächenharzmaterialschicht an oder benachbart zu einer ersten Oberfläche der Oberflächenharzmaterialschicht (105) angeordnet ist, wobei wahlweise die erste Oberfläche der Oberflächenharzmaterialschicht (105) im Anordnungsschritt (a) so von der Formoberfläche (306) weggewandt ist, dass sich der Großteil des Oberflächenharzmaterials (105) zwischen dem bahnförmigen Material (104) und der Formoberfläche (306) befindet.

15. Verfahren nach Anspruch 13 oder Anspruch 14, wobei wenigstens eine Trockenfaser-Verstärkungsschicht (102, 103) aus Faserverstärkungsmaterial eine Vielzahl von aufeinandergestapelten Trockenfaser-Verstärkungsschichten (102, 103) umfasst, wobei sich wenigstens eine untere Schicht (102) deckungsgleich zur Oberflächenharzmaterialschicht (103) erstreckt und wobei sich wenigstens eine obere Schicht (103) deckungsgleich zur Strukturharzmaterialschicht (101) erstreckt.

16. Verfahren nach einem der Ansprüche 11 bis 15, wobei das Verhältnis der Viskosität des Strukturharzmaterials (101) und der des Oberflächenharzmaterials (105), gemessen bei 20°C Raumtemperatur, 2 bis 14/1 beträgt.

17. Verfahren nach Anspruch 16, wobei das Verhältnis der Viskosität des Oberflächenharzmaterials (105) zu derjenigen des Strukturharzmaterials (101) während des Erwärmungsschritts (c) 5/1 bis 25/1 beträgt und wobei wahlweise im Aushärteschritt (d) die Aushärtereaktion des Strukturharzmaterials (101) exotherm verläuft, wodurch Wärme erzeugt wird, welche das Aushärten des Oberflächenharzmaterials (105) beschleunigt.

## Revendications

1. Matériau de moulage (100) comprenant au moins une couche de renfort fibreuse sèche (102, 103) ayant une couche superficielle de matériau de résine (105) jointe à une première surface de celle-ci et une couche de matériau de résine structurelle (101) jointe à une seconde surface de celle-ci, **caractérisé en ce qu'**un bord allongé de la couche de matériau de résine structurelle (101) se situe vers l'intérieur d'un bord allongé adjacent de la au moins une couche superficielle de matériau de résine (105) pour fournir une configuration étagée dans laquelle le matériau de résine structurel (101) est doté d'une encoche étagée qui est dépourvue de résine et qui se situe au bord de la couche de résine structurelle (101).

2. Matériau de moulage selon la revendication 1, dans lequel la couche de renfort fibreuse sèche (102, 103) adjacente à la couche de matériau de résine structurelle (101) a un bord allongé aligné avec le bord allongé du matériau de résine structurel (101), de sorte que la configuration étagée est dotée d'une encoche allongée (107) de ladite couche de renfort fibreuse sèche (102, 103) ayant les mêmes dimensions que l'encoche étagée du matériau de résine structurel (101).

3. Matériau de moulage selon la revendication 1 ou la revendication 2, dans lequel la couche superficielle de matériau de résine (105) est perméable à l'air.

4. Matériau de moulage selon la revendication 3, dans lequel l'épaisseur de la couche superficielle de matériau de résine (105) est de 100 à 400 microns, éventuellement de 170 à 270 microns.

5. Matériau de moulage selon l'une quelconque des revendications précédentes, dans lequel la couche superficielle de matériau de résine (105) est dotée d'une couche de matériau de canevas (104), éventuellement dans lequel la couche de canevas (104) est un matériau de polyester, éventuellement en outre un matériau de canevas lié par fusion de polyester.

6. Matériau de moulage selon la revendication 5, dans lequel la couche de matériau de canevas (104) est située sur ou à proximité d'une première face de la couche superficielle de matériau de résine (105) qui est jointe à la au moins une couche de renfort fibreuse sèche (102, 103), de sorte que la majorité du matériau superficiel de résine (105) soit entre la couche de matériau de canevas (104) et une seconde surface libre du matériau superficiel de résine (105).

7. Matériau de moulage selon l'une quelconque des revendications précédentes, dans lequel la largeur de l'encoche étagée est de 10 à 75 mm, éventuellement de 20 à 40 mm.

8. Matériau de moulage selon l'une quelconque des revendications précédentes, dans lequel l'encoche étagée s'étend le long d'un bord allongé du matériau de moulage (100).

9. Matériau de moulage selon l'une quelconque des revendications précédentes, dans lequel le rapport de la viscosité, mesurée à une température ambiante de 20°C, du matériau de résine structurel (101) à celle du matériau superficiel de résine (105) est de 2 à 14/1.

10. Matériau composite qui comprend un assemblage d'une pluralité de matériaux de moulage selon l'une quelconque des revendications précédentes, l'assemblage comprenant un réseau continu de matériaux de moulage (100), le bord périphérique de chaque matériau de moulage (100) entrant en contact avec un matériau de moulage adjacent du réseau et les couches superficielles de matériau de résine (105) étant disposées sur une face commune de l'assemblage, dans lequel le matériau composite est assemblé par chevauchement de la pluralité de matériaux de moulage (100) de sorte qu'un bord allongé d'un matériau de moulage (100) soit reçu dans l'encoche étagée d'un matériau de moulage adjacent (100), de sorte que la couche superficielle de matériau de résine (105) du matériau de moulage soit jointe à la couche de renfort fibreuse sèche (102, 103) du matériau de moulage adjacent (100).

11. Procédé de fabrication d'un moulage composite renforcé par des fibres, le procédé comprenant les étapes de :
(a) disposition d'une pluralité de segments de matériau de moulage sur la surface d'un moule (306) pour former un réseau continu de segments sur la surface du moule (306), chaque segment comprenant une couche superficielle de matériau de résine (105) et une couche de renfort fibreuse sèche (102, 103) sur la couche superficielle de matériau de résine (105), dans lequel le réseau continu est assemblé par chevauchement de la pluralité de segments de sorte qu'au moins un bord allongé de chaque segment chevauche un segment adjacent, de sorte que la couche superficielle de matériau de résine (105) de chaque segment recouvre un bord allongé de couche de renfort fibreuse sèche du segment adjacent ;
(b) fourniture d'une couche de matériau de résine structurelle (101) sur la couche de renfort fibreuse sèche (102, 103) ;
(c) chauffage de l'assemblage pour provoquer l'écoulement de la résine structurelle (101) dans, et l'imprégnation de, la couche de renfort fibreuse sèche (102, 103) ; et
(d) durcissement des matériaux de résine superficiel et structurel (105, 101) pour former le moulage composite renforcé par des fibres qui comprend une partie superficielle formée sur la couche superficielle de matériau de résine (105) stratifiée à une partie structurelle formée à partir d'au moins une couche du matériau de renfort fibreux (102, 103) et de la résine structurelle (101).

12. Procédé selon la revendication 11, dans lequel chaque segment comprend au moins une couche de renfort fibreuse sèche (102, 103) ayant une couche superficielle de matériau de résine (105) jointe à une première surface de celle-ci et une couche de matériau de résine structurelle (101) jointe à une seconde surface de celle-ci, dans lequel un bord allongé de la couche de matériau de résine structurelle (101) se situe vers l'intérieur d'un bord allongé adjacent de la au moins une couche superficielle de matériau de résine (105) pour fournir une configuration étagée dans laquelle le matériau de résine structurel (101) est doté d'une encoche étagée (107) qui est dépourvue de résine et qui se situe au bord de la couche de résine structurelle (101) ; et dans lequel les étapes (a) et (b) sont réalisées par assemblage de la pluralité de matériaux de moulage dans un moule, l'assemblage comprenant un réseau continu de matériaux de moulage, le bord périphérique de chaque matériau de moulage entrant en contact avec un matériau de moulage adjacent du réseau et les couches superficielles de matériau de résine (105) étant disposées sur une face commune de l'assemblage adjacent à une surface du moule (306), dans lequel le réseau continu est assemblé par chevauchement de la pluralité de matériaux de moulage de sorte qu'un bord allongé du matériau de moulage soit reçu dans l'encoche étagée (107) d'un matériau de moulage adjacent, de sorte que la couche superficielle de matériau de résine (105) du matériau de moulage soit jointe à la couche de renfort fibreuse sèche (102, 103) du matériau de moulage adjacent.

13. Procédé selon la revendication 12, dans lequel le chevauchement de segments adjacents a une largeur de 10 à 75 mm, éventuellement de 20 à 40 mm.

14. Procédé selon la revendication 12 ou la revendication 13, dans lequel la couche superficielle de matériau de résine (105) est supportée sur un support d'un matériau en feuille (104), dans lequel le matériau en feuille (104) de la couche superficielle de matériau de résine est situé à ou à proximité d'une première face de la couche superficielle de matériau de résine (105), éventuellement dans lequel une première face de la couche superficielle de matériau de résine (105) est éloignée de la surface du moule (306) par réalisation de l'étape (a) de telle sorte qu'une majorité du matériau de résine superficielle (105) soit entre le matériau en feuille (104) et la surface du moule (306).

15. Procédé selon la revendication 13 ou la revendication 14, dans lequel la au moins une couche de renfort fibreuse sèche (102, 103) du matériau de renfort fibreux comprend une pluralité de couches de renfort fibreuses sèches empilées (102, 103), au moins une couche inférieure (102) pouvant s'étendre conjointement à la couche superficielle de matériau de résine (103) et au moins une couche supérieure (103) pouvant s'étendre conjointement à la couche de matériau de résine structurelle (101).

16. Procédé selon l'une quelconque des revendications 11 à 15, dans lequel le rapport de la viscosité, mesurée à une température ambiante de 20°C, du matériau de résine structurel (101) à celle du matériau superficiel de résine (105) est de 2 à 14/1.

17. Procédé selon la revendication 16, dans lequel le rapport de viscosité, pendant l'étape de chauffage (c), du matériau superficiel de résine (105) à celle du matériau de résine structurel (101) est de 5 à 25/1, et éventuellement dans l'étape de durcissement (d), la réaction de durcissement du matériau de résine structurel (101) est exothermique ce qui génère de la chaleur qui accélère le durcissement du matériau superficiel de résine (105).
